# EUROPEAN PATENT APPLICATION

(11) **EP 1 457 808 A1**
(43) Date of publication of application: **15.09.2004**
(21) Application number: 03005191.6
(22) Date of filing: 08.03.2003
(51) Int. Cl.: G02C 7/02, G02C 7/10

(54) **Multi-function shatter-proof safety eyewear glass lens**

(71) Applicant: Evita International Ltd., Taipei (TW)
(72) Inventor: Ming, Chen Yau, No.7, Lane 21, Lungjiang Road, Taipei City (TW)
(74) Representative: Meyer, Ludgerus A.

(57) **Abstract**

The present invention relates to a multi-function shatter-proof safety glass lens, characterized in two optically ground and polished glass lens components with center thickness of 0.5mm ∼ 1.5mm are hardened by potassium ion penetration and then add adhesive to be laminated with a layer of break-resistant polymer thin film in between to form shatter-proof lens.

## Description

### BACKGROUND OF THE INVENTION

### FIELD OF THE INVENTION

The invention herein relates to a kind of glass lens with superior optical properties that is safe, aesthetic and can be easily processed by regular lens and eyewear factories without special skills and equipments.

### DESCRIPTION OF THE RELATED ART

Glass lens currently available on the market has the following deficiencies that keep it from being widely accepted by the eyewear industry:
1. Glass lens can not be tinted. So far there are no commercial ways to tint the glass lens into desired color at all.
2. Glass lens is lack of ultraviolet light protection. Ordinary glass lens cannot block the harmful ultraviolet radiation. There are some special UV-absorption glasses in the market. But they can only cut offUV rays at light frequencies not higher than 380nm. While the market requires UV protection up to 400nm recently. A new glass product recently introduced by Corning (Corning product code No. 8010) can cut off UV at 400nm. But its chemical instability, poor acid/alkaline resistance quality and high price keep it from being widely used by the eyewear industry.
3. Glass lens is heavier than resin lens. Although the optical property of glass lens is far more superior to that of resin lens, but it is not comfortable to wear due to its heavy weight.
4. Glass lens is difficult to process. Glass lens sold in the retail market must be either thermally or chemically hardened to meet the impact-resistant standards set by countries or regions like Europe, the US, Australia, Japan, etc. Both of these two hardening processes require special technology and facilities. Furthermore, the chemicals used in chemical hardening process are rather hazardous that might cause explosion if not properly handled. While thermal hardening requires raising temperature up to between 600°C and 800°C. This is highly dangerous temperature to handle. Regular glass lens labs, optical shops or even glass lens surfacing factories are not equipped to perform such process.
5. Glass lens is liable to break or shatter. Even if the glass lens is properly hardened to reach the impact-resistant standards, it will still crack or shatter when external force added to the glass lens exceeds its impact-resistance strength, causing injury in the eye or face.

### SUMMARY OF THE INVENTION

The objective of this invention is to provide an improved glass lens addressing the major deficiencies of glass lens just described that has the safety, aesthetics and processability characteristics of resin lens, while retaining the excellent optical properties of conventional glass lens.

### BRIEF DESCRIPTION OF THE DRAWINGS

The objective, features and effect of the invention herein will become more apparent in the following detailed description of the preferred embodiments, with reference to the accompanying drawings below.
FIG. 1 is the structural drawing of this invention.
FIG. 2 is a cross section of lens surface of this invention, displaying loosely-structured sodium ions (white) in the glass.
FIG. 3 is another cross section of lens surface of this invention, showing penetration of potassium ions (black) beneath the surface among original sodium ions.
FIG. 4 shows the first embodiment of this invention, displaying lens structure after lamination.
FIG. 5 shows assembly of components depicted in FIG. 4 before lamination.
FIG. 6 shows the second embodiment of this invention, displaying lens structure after lamination.
FIG. 7 shows assembly of components depicted in FIG. 6 before lamination.
FIG. 8 shows the third embodiment of this invention, displaying lens structure after lamination.
FIG. 9 shows assembly of components depicted in FIG. 8 before lamination.
FIG. 10 shows the fourth embodiment of this invention, displaying lens structure after lamination.
FIG. 11 shows assembly of components depicted in FIG. 10 before lamination.
FIG. 12 shows the fifth embodiment of this invention, displaying the front view of the front piece of lens.
FIG. 13 shows the cross section of FIG. 12, displaying lens structure after lamination.
FIG. 14 shows assembly of components depicted in FIG. 13 before lamination.

### DETAILED DESCRIPTION OF THE INVENTION

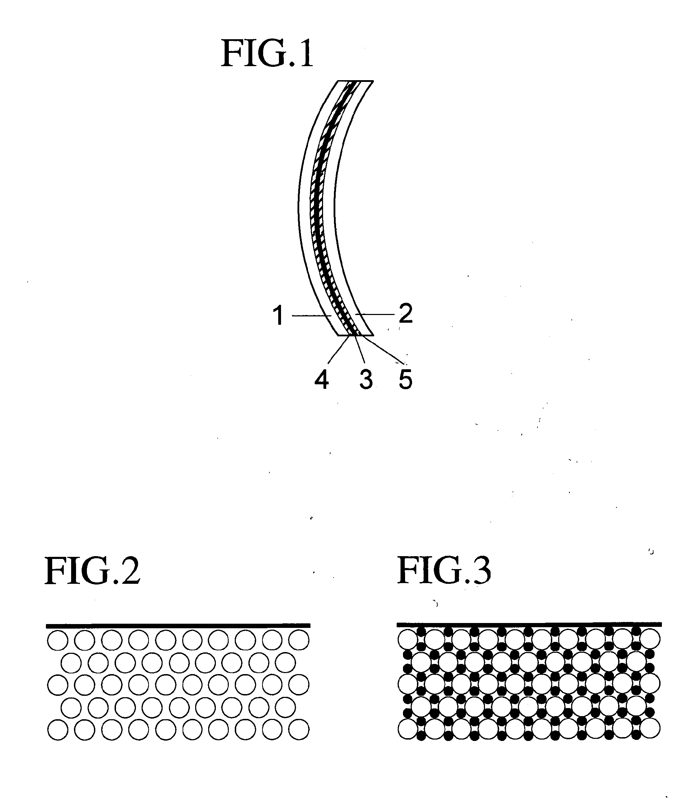

This invention is characterized by which a thermally set polymer thin film with high breaking strength is laminated between two glass lens components bonded by soft optical grade adhesive. As shown in FIG. 1, ① and ② are optically ground and polished glass lens components, ③ is spherical polymer thin film with high break-resistance strength, ④ and ⑤ are soft optical grade adhesive.

The present invention possess the following features:
1. Glass lens that can be tinted: The lens color of present invention comes mainly from the polymer thin film by dipping it in the dye and fixating the color to obtain the desired hue. If colorless glass lens components are used, the color of polymer thin film shows through completely; if colored lens components are used, the tinted polymer thin film can modify the color of lens components to become a more attractive new tint.
2. UV protection quality: If the glass lens itself does not come with ultraviolet light absorption quality or has insufficient UV absorption quality, UV absorbent may be added in the adhesive to supplement the required UV protection level.
3. Further hardening not required after cutting and edging: Glass lens of this invention is chemically hardened before lamination, in which the smaller potassium ions (K⁺) are forcibly introduced into the inner layers of glass molecular structure by thermal energy to fill up the voids left by larger sodium ions (Na⁺) to render the texture of surface glass more compact and therefore the entire lens more impact resistant. As shown in FIG. 2 depicting the cross section of lens surface, unhardened glass surface has only loosely structured sodium ions with poorer impact resistance. FIG. 3 shows more compact surface structure of glass after penetration of potassium ions. The deeper the penetration of potassium ions, the harder the surface and the greater the impact resistance is.
4. Thinner lens and lighter weight: Regular glass lens has only two surfaces that can be treated with chemical hardening. So the lens itself must have sufficient thickness, usually over 2mm, to obtain certain impact-resistance standard for glass eyewear lens. However the laminated lens of the present invention comprises two lens components with altogether four surfaces for chemical hardening treatment. After the two hardened lens components are laminated into one lens, their impact strength multiplies. Further fortified by the bonding agent and break-resistant film in between, the total impact resistance strength is more than two times of that of the conventional fully hardened thick glass lens. As such, the lens components may be ground to a much reduced thickness, which can be as thin as 0.6mm while still complying with the impact-resistance standards set forth in Europe, the US, Australia, Japan, etc.
5. Shatter proof: Even though lens of present invention is of superior impact resistance quality. However, when external force exceeds such enhanced impact resistance strength of such lens, the surface lens component may also crack. However, the lens will not break into pieces or shatter as the cracked pieces are held together to the polymer thin film by the soft adhesive.

### FEATURES OF THE INVENTION

As described, one of the features of the present invention is that the two optically ground and polished glass lens components with center thickness of 0.5mm ~ 1.5mm are hardened by potassium ion permeation and then laminated with a layer of break-resistant polymer thin film in between to form the shatter-proof lens.

Another feature of the present invention is that said polymer thin film may be tinted to produce lenses of all kinds of aesthetically pleasing hues with light filtering function.

Also another feature of the present invention is that the adhesive may be added with ultraviolet absorbing agent, such as benzotriazole (BTA), to provide the lens with maximum protection to the harmful ultraviolet radiation.

The last, another feature of the present invention is that the back lens component can be made as semi-finished lens blanks by using thicker glass blanks. Which can be further processed to a prescription eyewear lens.

### MATERIALS OF THIS INVENTION

Polymer thin film used in the present invention is break-resistant thin film 20 ∼ 200 µm thick, such as polycarbonate (PC), nylon, polyethylene terephathalate (PET), etc., which needs to be thermally set into spherical shape before lamination.

Lens of the present invention consists of two lens components, front lens and back lens, which may have the following combinations:
1. Finished plano lens: Both front and back lens components are finished lenses with center thickness of 0.5mm ∼ 1.5mm, and the dioptre difference between the two laminated surfaces of the two lens components is not greater than 0.10 dioptre. Thus the compound lens after lamination is still zero dioptre. Both front and back lens components need to be chemically hardened where penetration depth of potassium ions must be more than 10µm.
2. Semi-finished lens blank: The front lens component is a both-side finished spherical lens with center thickness of 0.5mm - 1.5mm and optical curvature between - 0.15 and +0.15 dioptre. This finished lens must be chemically hardened where penetration depth of potassium ions must be over 20µm. The back lens component is semi-fmished lens blank with only convex surface optically finished and center thickness of 5mm ~ 15mm. The curvature difference between the two laminated surfaces is not greater than 0.10 dioptre.

There is no restriction for adhesive used in the present invention, so long as it has good adhesion quality and its hardness after curing does not exceed that of the front or back lens component. Epoxy or polyurethane (PU) type of adhesive, either UV curing or thermal curing type is acceptable. The adhesive must be degassed and dehydrated to remove all bubbles and moisture in it before application.

If the lens components used are made of regular glass without ultraviolet absorption quality, UV absorbent, such as benzotriazole (BTA) may be added to the adhesive to effectively absorb the harmful ultraviolet radiation with wavelength between 360nm and 400nm for eye protection.

### DETAILED DESCRIPTION OF THE PREFERRED EMBODIMENTS

The present invention is further depicted with the illustration of embodiments.

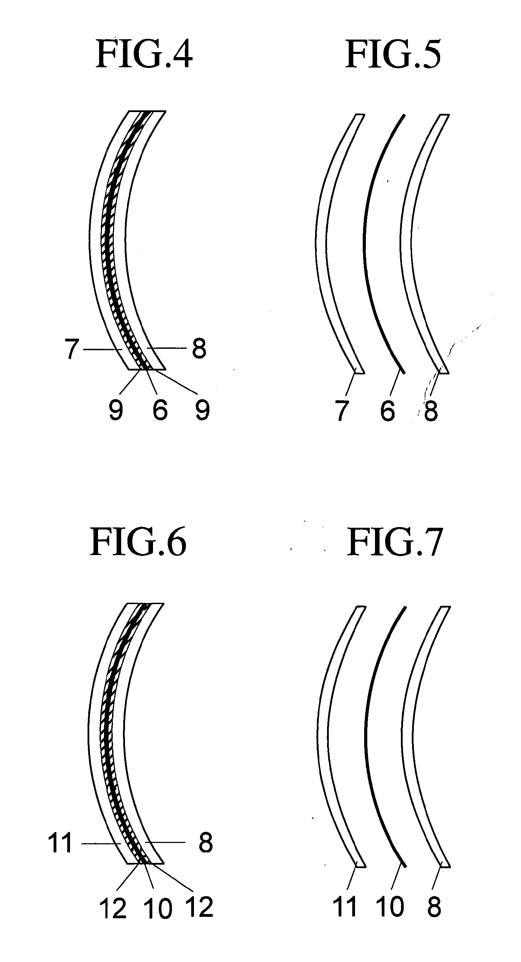

Referring to FIG. 4 and FIG. 5, the first embodiment of the present invention shows the structure of an 8-base curve plano dark gray sunglass lens. FIG. 4 shows the lens structure after lamination, while FIG. 5 shows the components of lens before lamination, including
1. Thin film ⑥: Dip 30µm PET thin film in gray dye and take it out when reaching 15% visible light transmission, and then let it dry after color fixation. Subject the gray PET thin film to a vacuum forming device with a spherical mold of curvature radius 66.075mm. Then thermally set the film into spherical shape.
2. Front lens component ⑦: Grind and polish regular white glass (Corning glass code No.8361) without UV absorption quality to the following specifications: the curvature radius of its convex surface 65.952mm, that of concave surface 66.276mm, and center thickness 0.9mm. Chemically hardened before lamination.
3. Back lens component ⑧: Use the same glass material as the front lens component; the curvature radius of its convex surface is 66.075mm, that of concave surface is 65.375mm, and its center thickness is 0.8mm. Chemically hardened before lamination.
4. Adhesive ⑨: Polyurethane two-part UV-absorbing thermal curing type.

The finished lens is zero dioptre with center thickness (including adhesive and polymer film) of 1.9mm and in dark gray color with visible light transmission of 18%.

Referring to FIG. 6 and FIG. 7, the second embodiment of the present invention shows the structure of an 8-base curve plano photochromic gray sunglass lens. FIG. 6 shows the lens structure after lamination, while FIG. 7 shows the components of lens before lamination, including
1. Thin film 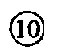 : Dip 120µm PC thin film in gray dye and take it out when reaching 40% visible light transmission, and then hot-air dry until the color is fixated. To curve the film, heat such film up to a temperature not greater than 30°C below said PC's glass transformation point. After the film is fully softened, press it with a spherical mold. The spherical mold has the same curvature radius as that in the first embodiment.
2. Front lens component 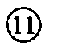 : Grind and polish Corning Sunsitive Gray glass (Corning glass code No. 81251) to the same specifications as those in Embodiment 1. The glass material is UV blocking at 380nm, and changes hue along with ambient light intensity.
3. Back lens component ⑧: Same as that of Embodiment 1.
4. Adhesive 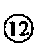 Epoxy two-part thermal curing type; UV absorption not required.

The finished product has zero dioptre with center thickness (including adhesive and polymer film) of 1.9mm, light gray with visible light transmission of 36% before color change, and dark gray with light transmission of 10% after fully exposed under intense light.

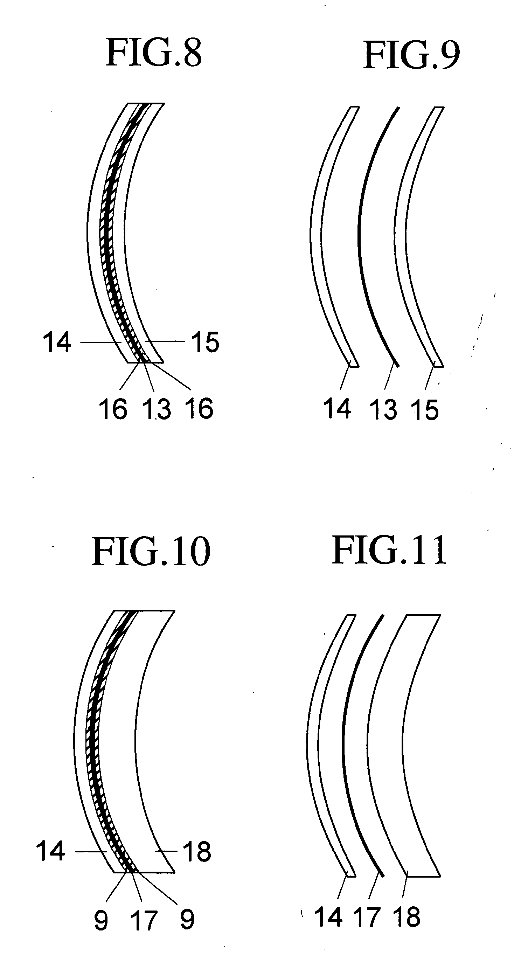

Referring to FIG. 8 and FIG. 9, the third embodiment of the present invention shows the structure of a 6-base curve plano light-blue sunglass lens. FIG. 8 shows the lens structure after lamination, while FIG. 9 shows the components of lens before lamination, including
1. Thin film 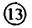 : Dip 50µm nylon thin film in blue dye and take it out when reaching 35% visible light transmission. After color fixated and drying, heat it with hot air to reach the temperature not greater than 40°C below the glass transformation point of said nylon material. Secure the softened film to a forming device with a spherical steel die of surface radius 88.776mm. Rapidly blow hot air under high pressure to the film surface against the steel die, hold the pressure, and then cool it down until the film becomes solid state. The curvature radius of convex surface of resulting film is then 88.766mm.
2. Front lens component 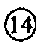 : Grind and polish Corning regular non-UV white glass to the following specifications: the curvature radius of its convex surface 87.751mm, that of concave surface 88.766mm, and center thickness 0.8mm. Chemically hardened before lamination.
3. Back lens component 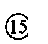 : The back lens is made of the same material as the front lens, but has different curvature; the curvature radius of its convex surface is 88.567mm, and that of concave surface is 87.166mm.
4. Adhesive 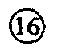 : PU adhesive UV-curing type added with BTA for UV protection up to 400nm.

The finished product has zero dioptre with center thickness (including adhesive and polymer film) of 1.7mm. Light blue tint with visible light transmission of 34% with UV protection up to 400nm.

Referring to FIG. 10 and FIG. 11, the fourth embodiment of the present invention shows the structure of dark brown semi-fmished lens blank. FIG. 10 shows the lens structure after lamination, while FIG. 11 shows the components of lens before lamination, including
1. Thin film 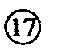 : Dip 80µm PET thin film in dark brown dye and take it out when reaching 15% visible light transmission. Bend the film using the same method specified in Embodiment 1 to obtain thin film of spherical surface with curvature radius of 88.567mm.
2. Front lens component 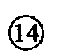 : Same as the front lens component in Embodiment 3.
3. Back lens component 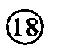 : The back lens component is made of the same material as the front lens component; the curvature radius of its convex surface is 88.567mm, while its concave surface is cosmetically ground and polished to obtain good visual transparency with curvature radius of 85mm. The center thickness of back lens component is 10mm.
4. Adhesive ⑨: Same adhesive as that in Embodiment 1 is used.

The concave surface 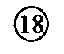 of laminated semi-finished lens blank may be further processed to certain dioptre to produce a shatter-proof, UV-protection, and aesthetic prescription eyewear lens.

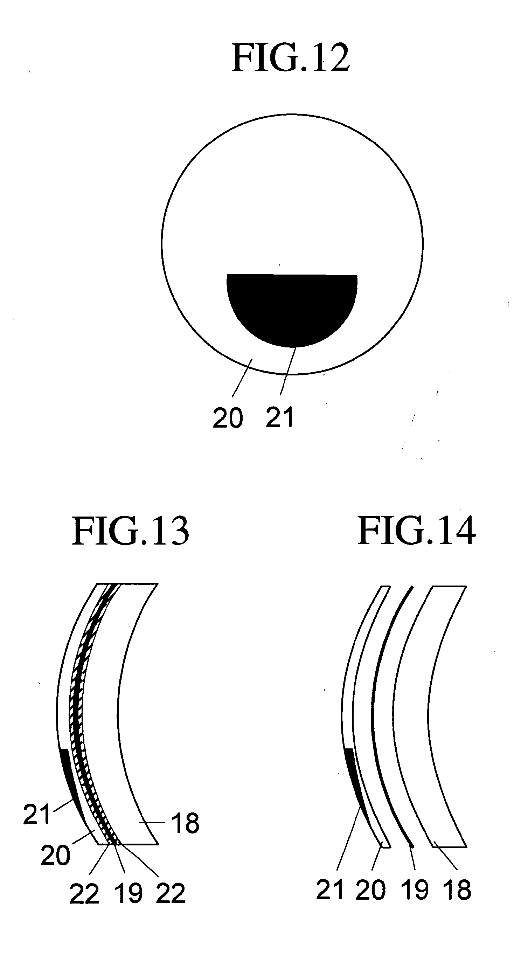

Referring to FIG. 12, FIG. 13 and FIG. 14, the fifth embodiment of the present invention shows the structure of a semi-finished bifocal lens blank. FIG. 12 shows the front view of the lens, FIG. 13 shows the structure of lens after lamination, while FIG. 14 shows the components of lens before lamination, including
1. Thin film 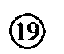 : Process transparent, colorless PET pellets into a spherical hollow ball with diameter of 88.766mm and skin thickness of 0.2mm by blow molding method. Divide the ball into two halves to become two spherical film components.
2. Front lens component 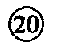 : Made of a regular plano bifocal lens blank. Grind and polish it into optical quality of center thickness of 0.8mm ~ 1.5mm. The thinner the better but only so much to the point that the segment of presbyopic lens ( 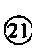 remains intact. Control the curvature radius of its convex surface to 87.751mm and that of concave surface to 88.766mm.
3. Back lens component 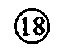 : Made of regular white non-UV glass with the same specification as that in Embodiment 4.
4. Adhesive 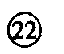 : PU two-part type UV-absorbing thermal curing adhesive.

The laminated product is a semi-finished bifocal lens blank. The concave surface of lens component @ may be further processed to become a finished bifocal lens of desired prescription with shatter-proof and UV-protection quality.

## Claims

1. A multi-function shatter-proof safety glass lens, **characterized in** two optically ground and polished glass lens components with center thickness of 0.5mm ∼ 1.5mm are hardened by potassium ion penetration and laminated with a layer of break-resistant polymer thin film in between to form shatter-proof lens.

2. A multi-function shatter-proof safety glass lens as claimed in Claim 1, wherein said polymer thin film may be tinted to obtain lenses of different colors and visible light transmission rates for light filtering function.

3. A multi-function shatter-proof safety glass lens as claimed in Claim 1, wherein adhesive for lamination may be added with UV absorbent, such as benzotriazole (BTA), to provide the lens the function of harmful ultraviolet light protection.

4. A multi-function shatter-proof safety glass lens as claimed in Claim 1, wherein the concave surface of lens may be laminated with thicker lens component for use as a semi-finished product.
